# EUROPÄISCHE PATENTSCHRIFT

(11) **EP 1 646 676 B1**
(45) Veröffentlichungstag und Bekanntmachung des Hinweises auf die Patenterteilung: **29.02.2012**
(21) Anmeldenummer: 04766185.5
(22) Anmeldetag: 12.07.2004
(51) Int. Cl.: C08J 5/18, C08K 5/103, C08L 29/14, B32B 17/10, B32B 27/28

(54) **FOLIE FÜR VERBUNDSICHERHEITSSCHEIBEN MIT GERINGER EIGENKLEBRIGKEIT UND GUTER GLASHAFTUNG**
FILM FOR COMPOSITE SAFETY GLAZINGS, FEATURING LOW INHERENT TACK AND GOOD ADHESION TO GLASS
FILM DESTINE A UN VITRAGE COMPOSITE DE SECURITE ET AYANT UNE FAIBLE AUTO-ADHERENCE ET UNE BONNE ADHERENCE SUR LE VERRE

(30) Priorität: 12.07.2003 DE 10331648
(43) Veröffentlichungstag der Anmeldung: 19.04.2006
(73) Patentinhaber: Kuraray Europe GmbH, 65926 Frankfurt am Main (DE)
(72) Erfinder: HOSS, Manfred, 53844 Troisdorf (DE); STENZEL, Holger, 53773 Hennef (DE)
(74) Vertreter: Kisters, Michael Marcus
(86) Internationale Anmeldenummer: PCT/EP2004/051449
(87) Internationale Veröffentlichungsnummer: WO 2005/005525

(56) Entgegenhaltungen:
- EP-A- 0 373 139
- EP-A- 0 617 078
- WO-A-03/051974

## Beschreibung

### Technisches Umfeld

Verbundsicherheitsscheiben (VSG), bestehend aus zwei Glasscheiben und einer die Glasscheiben verbindenden Klebefolie aus weichmacherhaltigen teilacetalisierten Polyvinylalkoholen, vorzugsweise aus Polyvinylbutyral (PVB), werden insbesondere als Windschutzscheiben in Kraftfahrzeugen eingesetzt. Hierbei kann gegebenenfalls eine Glasscheibe durch eine Kunststoffscheibe, vornehmlich aus einem amorphen Polyamid, transparentem PMMA, Polycarbonat oder Polyester, ersetzt sein. Auch auf dem Bausektor, z. B. als Fensterscheiben oder als Zwischenwände, werden solche Silikatglas/Silikatglas- bzw. Silikatglas/Kunststoff-Verbunde eingesetzt. Je nach Verwendung werden auch Mehrfachverbunde, also Verbunde, die aus mehr als zwei tragenden Schichten bestehen, eingesetzt (z.B. Verbundpanzergläser).

Die Zwischenfolien zur Herstellung von Verbundsicherheits□scheiben werden in der Regel extrudiert und nach der Formgebung in Breitschlitzwerkzeugen zu großen Rollen aufgewickelt. Die Zwischenfolien - nachfolgend auch verkürzt PVB-Folien genannt - weisen jedoch nicht nur eine gute Haftung gegenüber Glas, sondern auch gegenüber der benachbarten Wickellage der Rollen auf. Diese Blocking-Neigung genannte Eigenschaft erschwert die Handhabung der Folien insbesondere beim Auf- bzw. Abwickeln. Neben der Rollenware wird weichmacher□lhaltiges PVB auch als gestapelte Zuschnitt-Ware (sog. blanks) vertrieben, wobei die Blocking-Neigung ebenfalls unerwünscht ist.

Bei Verbundsicherheitsscheiben wird eine gute Haftung der Zwischenfolie zum Glas angestrebt. In der Regel ist eine gute Haftung der Folie an Glas mit einer unerwünschten Haftung der Folie an sich selbst (Eigenhaftung, Blocking) verbunden.

In Stand der Technik sind daher viele Versuche unternommen worden, um Zwischenfolien für Verbundsicherheitsglas mit einer guten Haftung an Glas in Kombination mit verminderten Blockingeigenschaften herzustellen.

Aus der
DE 1704568 A-.
ist ein Verfahren zur Herstellung von weichmacherhaltigen, oberflächenmattierten Polyvinylbutyralfolien bekannt, bei dem man die bereits mit dem gewünschten Wassergehalt versehenen PVB-Folien zusammen mit einer als Trennschicht wirkenden Einlage aus einer gegebenenfalls mattierten Polyolefinfolie aufspult und die so erhaltenen Rollen luft- und feuchtigkeitsdicht verpackt. Der Einsatz dieser sogenannten Zwischenläuferfolie ist umständlich.

Aus der
DE 1927936 A-.
ist ein Verfahren zur Herstellung von weichmacherhaltigen Polyvinylbutyralfolien geringerer Klebneigung bekannt, die nach dem Waschen Folien mit beidseitig aufgerauten Oberflächen ergeben. Hierzu pudert man die Folien in noch warmem Zustand nach der Extrusion oder gegebenenfalls nach oberflächlicher Erwärmung mit gegenüber den Folien indifferenten, wasserlöslichen, nicht hygroskopischen, vorzugsweise kristallinen und farblosen Stoffen ein, die man durch Aufpressen in der Wärme auf den Folien verankert. Dieses Verfahren ist jedoch sehr aufwändig.

Weiterhin gibt es zahlreiche Erfindungen, die eine vorübergehende Verringerung der Klebrigkeit der weichmacherhaltigen Polyvinylbutyralfolien mittels spezieller Oberflächenprägungen oder anderweitigem Erzeugen besonderer Oberflächenstrukturen anstreben (z.B.
EP 0710545 A-.
EP 0185863 B-.
). In aller Regel reicht der hierdurch erzielte Effekt jedoch nicht aus, die Folienwickel bei üblichen Umgebungs□temperaturen zu transportieren. Die Rollen aus PVB-Folien werden daher trotz optimierter Oberflächengestaltung nahezu ausschließlich entweder mit Zwischenläuferfolien ausgeliefert oder als sogenannte Kühlfolie eingesetzt.
Hierbei wird die Folie noch vor dem Aufwickeln auf eine Temperatur von 4 - 10 °C gekühlt. Die fertigen Folienwickel müssen ohne Unterbrechung der Kühlkette bis zur Weiterverarbeitung bei einer Temperatur von unter 10 °C transportiert werden.

Es sind auch bereits Ansätze bekannt geworden, die Blocking-Neigung von PVB-Folien durch Modifikation des PVB Harzes, der Weichmacher oder durch Zusatz von die Klebrigkeit vermindernden Substanzen zu verringern
US 4999078 --.
). Diese Verfahren haben jedoch in der Regel zum Nachteil, dass die Haftung der Folie gegenüber dem Glas bei der späteren Laminierung ebenfalls beeinflusst wird oder ihre Wirkung nicht ausreichend hoch ist, um eine aufwendige Kühlung vermeiden zu können. Ein weiterer Nachteil dieser Verfahren ist, dass modifizierte PVB-Harze und Weichmacher kommerziell nur sehr eingeschränkt verfügbar sind. Diese Alternativen konnten sich daher auf dem Markt bislang nicht durchsetzen.

In
DE 19756274 A--.
sind Polyvinylbutyralfolien mit einem Zusatz von amorphen Siliciumdioxid offenbart, die eine verbesserte Haftung an Glas besitzen. Obwohl SiO in der Folie aufgrund des nahezu gleichen Brechungsindex nicht zu sehen ist, ist der Zusatz von Füllstoffen in Folien für Verbundsicherheitsglas nicht erwünscht.

EP 0067022 A--.
offenbart PVB-Folien mit einem geringen Polymerisations□grad des PVB von 1000 - 3000 und einer damit verbundenen geringen Eigenhaftung. Die Auswirkung des geringen Polymerisationsgrad des PVBs auf die Haftung der Folie an Glas ist nicht beschrieben.

In
DE 10162338 --.
wird zur Reduzierung der Blockingneigung von PVB-Folien der Zusatz von Pentaerythritestern vorgeschlagen. Die Haftung von PVB-Folien an Glasoberflächen kann z.B. in einem Schertest nach
EP 0067022 B --.
bestimmt werden und wird in
DE 10162 338 --.
mit ca. 22 - 30 N/mm² (Luft/Luft) und ca. 15 -19 N/mm² (Zinn/Zinn) angegeben. Der Zusatz von Pentaerythritestem verändert die Haftkraft der Folie an Glas praktisch nicht, verbessert jedoch das Blockingverhalten.

Da die Haftung der Folie an Glas ein sicherheitsrelevantes Merkmal der Verbundsicherheitsverglasung ist, wird diese Folieneigenschaft häufig zu Ungunsten einer verminderten Blockingkraft optimiert. Folien mit guter Haftung an Glas besitzen daher häufig eine hohe Blockingneigung und sind daher nur gekühlt oder mit Zwischenläuferfolie zu transportieren bzw. zu verarbeiten.

### Offenbarung der Erfindung

### Technisches Problem

Aufgabe der vorliegenden Erfindung ist es, eine als Zwischenschicht in Verbundsicherheitsgläsern geeignete weichmacherhaltige Polyvinylbutyral-Folie zur Verfügung zu stellen, die bezüglich ihrer Blockingeigenschaft und der Haftung an Glas gute Kompromisseigenschaften aufweist.

Es wurde gefunden, dass weichmacherhaltige Polyvinybutyralfolien gemäß dem Hauptanspruch einen idealen Kompromiss zwischen Eigen□haftung und Haftung an Glasoberflächen aufweisen. Dies bedeutet, dass die Folien in einfacher Weise transportiert oder gelagert werden können und dennoch eine geeignete Haftkraft an Glasoberflächen besitzen.

Gegenstand der vorliegenden Erfindung sind daher weichmacherhaltige Polyvinylbutyralfolie mit einer T-Peel-Eigenhaftung von 0,1 bis 24 N/30 mm und einer Kompressionsscherhaftung an Luft/Luft-Glasoberflächen von 10 bis 20 N/mm² gemäss Anspruch 1.

Bei der Messung dieser Haftungseigenschaften sind die im Folgenden genauer beschriebenen, in Anlehnung an die in
EP 0067022 A--.
bzw.
DE 10162 338 -.
genannten Methoden anzuwenden.

Bei der Messung der Folienhaftung an Glasoberflächen sind die unterschiedlichen Oberflächeneigenschaften von Flachglas zu beachten. Bei der Herstellung von Flachglas ist eine Seite des Glases dem Zinnbad und die andere Seite der Luft zugewandt, was die Zinn-Dotierung der Badseite zur Folge hat. Die unterschiedlichen Seiten von Flachglas weisen auf Grund der Dotierung eine unterschiedliche Haftung der Polyvinyl□butyral□folie auf. Üblicherweise werden daher Haftungseigenschaften von PVB-Folien in Glaslaminaten gemessen, indem die Folie jeweils zu gleichen Seiten der Glasscheiben Kontakt hat. Die Angaben zur Kompressions□scherhaftung an Luft/Luft- bzw. ZinnlZinn-Glasoberflächen beziehen sich auf entsprechend aufgebaute Laminate.

Bevorzugt weisen erfindungsgemäße PVB-Folien eine T-Peel Eigenhaftung von 0,1 - 20 N/30 mm, insbesondere 0,1- 10 N/30 mm, bevorzugt 0,1- 5 N/30 mm, besonders bevorzugt 0,1 - 2,5 N/30 mm auf.

Unabhängig hiervon können erfindungsgemäBe PVB-Folien eine bevorzugte Kompressionsscherhaftung an Luft/Luft-Glasoberflächen von 13 - 20 Nhnm², insbesondere 17 - 20 N/nun aufweisen. Alternativ kann die Kompressionsscherhaftung der Folie an Luft/Luft-Glasoberflächen 10 -17 N/m², bevorzugt 12 -15 N/mm² betragen.

Erfindungsgemäße Polyvinylbutyralfolien weisen weiterhin bevorzugt eine Kompressionsscherhaftung an Glasoberflächen bezüglich der Zinn/Zinn-Seiten des Glases von 6 - 15 bzw. 6 -14 N/mm7, bevorzugt 8 - 14 N/mm² insbesondere 10 - 14 N/mm² auf.

Wie bereits ausgeführt, weisen Polyvinylbutyralfolien nach der Erfindung eine besonders niedrige Eigenhaftung auf. Dies hat insbesondere bei der Verarbeitung von Folienwickeln große praktische Bedeutung. Zur Zeit werden Polyvinylbutyralfolien in einer Länge von bis zu ca. 500 m zu Folienwickeln aufgerollt, so dass bei zu großer Eigenhaftung die inneren Lagen des Folienwickels praktisch nicht mehr abrollbar sind.

Erfindungsgemäße PVB-Folien weisen eine so geringe Eigenhaftung auf, dass ein hieraus hergestellter Folienwickel nach einer Lagerung von mindestens 3 Monaten bei einer Temperatur von mindestens 35 °C eine auf die Folienbreite bezogene Abzugskraft beim Abwickeln max. 25 % der Abzugskraft eines Folienwickels einer Standardfolie mit gleicher Breite aufweist. Als Standardfolie im Sinne der vorliegenden Erfindung wird eine handelsübliche PVB-Folie wie Trosifol MB-FR, MV-FR oder PR der Firma HT Troplast AG angesehen. Diese weisen unter den o.g. Bedingungen bei einer Rollenbreite von ca. 1 m Abzugskräfte in Abhängigkeit von der Rollenlänge von 80 bis 800 N (s. Beispiel) auf.

Die erfindungsgemäßen Polyvinylbutyralfolien erhalten die folgenden Komponenten:
50 bis 80 Gew.% Polyvinylbutyral,
20 bis 50 Gew.% mindestens eines Weichmachers,
0,01 bis 5 Gew.% mindestens eines Andblockingmittels und
0,001 bis 1 Gew.% mindestens einer die Haftung der Mischung an Glas reduzierenden Substanz.

Die verwendeten Polyvinylbutyral-Harze werden in bekannter Weise durch Acetalisierung von hydrolysierten Polyvinylestern mit Butyraldehyd hergestellt. Das bevorzugt verwendete Polyvinylbutyral-Harz enthält 10 bis 25 Gew.-%, vorzugsweise 17 bis 23 Gew.-% und besonders bevorzugt 19 bis 21 Gew.-% Vinylalkoholreste. Das Polyvinylbutyral enthält ggf. zusätzlich 0 bis 20 Gew.-%, bevorzugt 0,5 bis 2,5 Gew.-% Acetatreste.

Die verwendeten Antiblockingmittel sind gemäß einer Variante der Erfindung so auszuwählen, dass diese nur eine geringe Veränderung der Haftung der Folie an Glasoberflächen bewirken. Die Veränderung der Haftung an Glasoberflächen wird wiederum gemäß dem Kompressionsschertest bestimmt, wobei die verwendeten Antiblockingmittel bevorzugt eine Veränderung der Haftung der Folie an Luft/Luft und/ oder Zinn/Zinn-Glasoberflächen von ± 20% zur Folge haben.

Analog ist bevorzugt, dass die zur Haftungskontrolle der Folien an Glas eingesetzten Substanzen keine unerwünschte Erhöhung der Eigenhaftung der Folien zur Folge haben. Tolerierbar ist hier der Einsatz von haftungskontrollierenden Substanzen, die gleichzeitig eine Erhöhung der Eigenhaftung der Folien gemäß T-Peeltest von maximal 20 % bewirken.

Besonders bevorzugt werden als Antiblockingmittel ein oder mehrere Pentaerythritester der Formel I

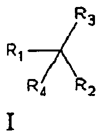

mit R₁, R₂, R₃, R₄ jeweils gleich oder verschiedenen: -CH₂OH, -CH₂OR₅, -CH₂OCOR₅ oder -CH₂OCO-R₆-COOR₅ wobei R₅, R₆ für gesättigte oder ungesättigte, verzweigte oder unverzweigte Kohlenwasserstoffreste mit 1 bis 26 Kohlenstoffatome steht, eingesetzt.

Die erfindungsgemäß eingesetzten Pentaerythritester sind Ester des Pentaerythrits, einem vierwertigen Alkohol, wobei eine oder mehrere der Alkoholgruppen durch ein- oder mehrwertige Carbonsäuren substituiert sind. Die zur Veresterung verwendeten Säuren sind bevorzugt längerkettige Säuren, insbesondere mit 12 bis 21 Kohlenstoffatomen.

Die bevorzugten Pentaerythritester weisen bereits in Mengen ab 0,002 bis 0,005 Gew.-%, also 20 - 50 ppm, eine spürbare Antiblocking- Wirkung auf. Bevorzugt werden sie in Mengen von 0,01 bis 0,1 Gew.-%, jeweils bezogen auf die Masse der Folie, eingesetzt. Bei Einsatz von größeren Mengen als 1 Gew.-% besteht die Gefahr einer Trübung der Folie, so dass eine Verwendung von Folien mit höherem Gehalt an Pentaerythritester als Zwischenschicht in Verbundsicherheitsgläsern in der Regel vermieden werden sollte.

Für die vorliegende Erfindung haben sich als Pentaerythritester insbesondere Pentaerythrit-tetra-stearate und Pentaerythrit (mono, di, oder tri)-adipato-stearate, letztere insbesondere auch als Isomergemisch, als besonders geeignete Antiblockingmittel herausgestellt.

Weiterhin können die erfindungsgemäßen PVB-Folien als Antiblockingmittel ein oder mehrere Amidwachse enthalten.

Als Antiblockingmittel können z.B. die in
DE 10064373 --.
genannten Amidwachse eingesetzt werden. Für die vorliegende Erfindung besonders geeignete Amidwachse sind chemische Verbindungen von di- oder oligofunkctionellen Alkylenaminen mit linearen oder verzweigten aliphatischen oder aromatischen Carbonsäuren.

Bevorzugt sind Amidwachse der allgemeinen Zusammensetzung: 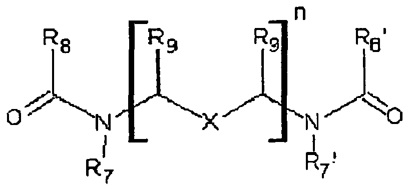 mit R₈, R_{8'}= gleich oder verschieden Alkyl-Rest oder Aryl-Rest, mit 1 bis 15 Kohlenstoffatomen, R₉, R₉ '= gleich oder verschieden H, Alkyl-Rest oder Aryl-Rest, mit 1 bis 15 Kohlenstoffatomen, R₇, R₇ '= gleich oder verschieden H, Alkyl-Rest oder Aryl-Rest, mit 1 bis 15 Kohlenstoffatomen
X = direkte Verbindung, S oder NR₈ mit R₈= H, Alkyl-Rest oder Aryl-Rest mit 1 bis 15 Kohlenstoffatomen und n=1 bis 15.

Insbesondere Amidverbindungen auf Basis von Ethylendiamin und lang□kettigen gesättigten oder ungesättigten aliphatischen Carbonsäuren, und hier insbesondere das N,N'-Bisstearoyl-ethylen-diamin, haben sich als geeignete Zusätze in weichgemachten Polyvinylbutyralfolien beraus□ge□stellt, um einerseits die Eigenklebrigkeit der Folien erheblich herab□zu□setzen, andererseits aber die Haftung der Folie gegenüber Glas nicht zu beeinträchtigen.

Das Amidwachs wird in Mengen von 0,001 bis 0,5 Gew.-%, bevorzugt in Mengen von 0,01 bis 0,10 Gew.-% und besonders bevorzugt in Mengen von 0,02 bis 0,05 Gew.-%, jeweils bezogen auf die Masse der Folie, eingesetzt. Bei Einsatz von größeren Mengen an Amidwachs besteht die Gefahr einer Trübung der Folie, so dass eine Verwendung von Folien mit höherem Gehalt an Amidwachs als Zwischenschicht in Verbund□sicherheits□gläsern in der Regel ausscheidet.

Besonders bevorzugt werden Amidwachse, ausgewählt aus der Gruppe bestehend aus
- Bis-stearoyl-ethylendiamin,
- Bis-olea-ethylendiamin,
- Bis-eruca-ethylendiamin und
- Bis-behensäure-ethylendiamin
eingesetzt.

Bei der Verwendung von Amidwachsen ist auf deren Neigung zur Kristallisation bei Lagerung unter niedrigen Temperaturen (ca. 10 °C) zu achten. Durch eine Teilkristallisation können sich unerwünschte Trübungen im Folienmaterial entwickeln. Es hat sich als besonders vorteilhaft erwiesen, den Zusatz an Antiblockingmittel zunächst im verwendeten Weichmacher zu dispergieren, oder, sofern diese darin löslich sind, zu lösen.

In einer besonderen Variante der Erfindung erhalten die Polyvinyl□butyralfolie Substanzen, die eine Haftung an Glas reduzieren. Diese sind insbesondere Zink-, Alkali- und/oder Erdalkalisalze organischer Säuren, Zinke-, Alkali- und/oder Erdalkalichlorate und/oder perchlorate und/oder Zink-, Alkali- und/oder Erdalkalialkoxide.

Geeignete Metallsalze von Carbonsäuren betreffen insbesondere Verbindungen von C1- bis C8- Carbonsäuren, bevorzugt aliphatische Monocarbonsäuren, insbesondere Acetate, Butyrate, 2-Ethylbutyrate oder Octanoate. Insbesondere wird als haftungskontrollierende Substanz Natrium- und/oder Kaliumacetat, Natrium- und/oder Kaliumformiat sowie Magnesium-2-ethylbutyrat bzw. -octanoat eingesetzt.

Die haftungsreduzierenden Substanzen werden bevorzugt mit 0,001 Gew.%, besonders bevorzugt 0,001 bis 0,5 Gew.%, insbesondere 0,001 bis 0,1 Gew.%, bezogen auf die weichmacherhaltige Mischung, eingesetzt.

Auch diese Verbindungen werden bevorzugt in dem verwendetem Weichmacher gelöst und dem PVB-Harz bei der Extrusion beigemischt.

Die Herstellung der PVB-Folien erfolgt in an sich bekannter Weise, z. B. durch Extrusion mittels eines Breitschlitzwerkzeuges gemäß der
EP 0185 863 B--.
Bei der Extrusion werden die Antiblockingmittel und die Haftungsreduzierenden Zusätze, sofern sie nicht löslich sind, im Extruder aufgeschmolzen und homogen in der Schmelze verteilt.

Als Weichmacher in den erfindungsgemäßen Folien eignen sich zum einen alle nach dem Stand der Technik bekannten Weichmacher (Standardweichmacher), insbesondere Ester von mehrwertigen Säuren, mehrwertigen Alkoholen oder Oligoetherglykolen, wie z. B. Adipinsäureester, Sebazinsäureester oder Phthalsäureester, insbesondere Di-n-hexyladipat, Dibutylsebazat, Dioctylphthalat, Ester von Di-, Tri- oder Tetraglykolen mit linearen oder verzweigten aliphatischen Carbonsäuren und Mischungen dieser Ester. Weiterhin können Ester von aliphatischen Diolen mit langkettigen aliphatischen Carbonsäuren, insbesondere Ester von Triethylenglykol mit 6 bis 10 C-Atomen enthaltenden aliphatischen Carbonsäuren, wie 2-Ethylbuttersäure oder n-Heptansäure verwendet werden.

Besonders bevorzugt sind ein oder mehrere Weichmacher aus der Gruppe bestehend aus Di-n-hexyladipat (DHA), Dibutylsebazat (DBS), Dioctylphthalat (DOP), Ester von Di-, Tri- oder Tetraglykolen mit linearen oder verzweigten aliphatischen Carbonsäuren, insbesondere Triethylenglykol-bis-2-ethylbutyrat (3GH), Triethylenglykol-bis-n-heptanoat (3G7), Triethylenglykol-bis-2-ethylhexanoat (3G8), Tetraethylenglykol-bis-n-heptanoat (4G7).

Werden Pentaerythritester als Antiblockingmittel eingesetzt, so erleichtern diese auch den Einsatz von Spezialweichmachern, die z. B. eine verbesserte Schalldämmung der Folien bewirken, siehe auch die
DE 199 38 159 A --.
,auf deren Inhalt hiermit vollinhaltlich Bezug genommen wird. Die Spezialweichmacher können auch ohne ein Antiblockingmittel verwendet werden. Zu diesen Spezialweichmachern zählen insbesondere Weichmacher aus der Gruppe bestehend aus

Polyalkylenglykolen der allgemeinen Formel HO-(R-O)ₙ -H mit R = Alkylen und n > 5,

Blockcopolymeren aus Ethylen- und Propylenglykol der allgemeinen Formel HO-(CH₂-CH₂-O)ₙ-(CH₂-CH(CH₃)-O)ₘ -H mit n > 2, m > 3 und (n+m) < 25,

Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO-(CH₂-CH₂-O)ₙ-(CH₂-CH(CH₃)-O)ₘ -R₁ mit n > 2, m > 3 und (n+m) < 25 und R₁ als organischem Rest,

Derivate von Polyalkylenglykolen der allgemeinen Formel R₁ -O-(R₂ -O)ₙ -H mit R = Alkylen und n ≥ 2, bei denen der Wasserstoff von einer der beiden terminalen Hydroxygruppen des Polyalkylenglykols durch einen organischen Rest R₁ ersetzt ist,

Derivate von Polyalkylenglykolen der allgemeinen Formel R₁-O-(R₂-O)ₙ R₃ mit R₂ = Alkylen und n > 5, bei denen der Wasserstoff bei der terminaler Hydroxygruppen des Polyalkylenglykols durch einen organischen Rest R₁ bzw. R₃ zersetzt ist.

Diese Spezialweichmacher werden bevorzugt in Kombination mit einem oder mehreren der genannten Standardweichnlachem eingesetzt. Die Spezialweichmacher führen ohne den Einsatz von Antiblockingmitteln in der Regel zu Folien mit besonders hoher Blocking-Neigung, so dass deren Handhabung beim späteren Laminieren und insbesondere beim Aufwickeln und Abwickeln besonders problematisch ist. Amidwachse und/oder Pentaerythritester bewirken in synergistischer Weise eine Herabsetzung der Blocking-Eigenschaften der Folien, ohne deren Haftung an Glas bzw. die Schalldämmung negativ zu beeinflussen.

Erfindungsgemäße Polyvinylbutyral-Folien enthalten vorzugsweise 20 bis 50 Gewichtsteile und besonders bevorzugt 30 bis 40 Gewichtsteile Weichmacher (ggf. Summe der Anteile aus Standard- und Spezial□weichmacher), bezogen auf 100 Gewichtsteile PVB. Es ist bekannt, dass höhere Gehalte von Weichmachern zu erhöhter Eigenklebrigkeit der Folien führen. Der Einsatz von Antiblockingmitteln wie den Amidwachsen oder Penta□erythrit□estern ermöglicht jedoch auch den Einsatz höherer Mengen an Weich□macher, die ohne diesen Zusatz nicht mehr verarbeitbar wären.

Die erfindungsgemäßen Folien werden insbesondere als Zwischenfolie in Sicherheitsverbundglas eingesetzt. Hier ist ein über lange Zeit trübungsfreies Verhalten auch bei Temperaturschwankungen notwendig.

Erfindungsgemäße Folien besitzen daher nach einer Lagerung von mindestens 2 Monaten bei einer Temperatur von 10 ± 3 °C einen Trübungswert gemäß ASTM D 1003 - 51 von maximal 1 %.

Der Wassergehalt der Folien wird bevorzugt auf 0,15 bis 0,8 Gew.-%, insbesondere auf 0,3 bis 0,5 Gew.-% eingestellt.

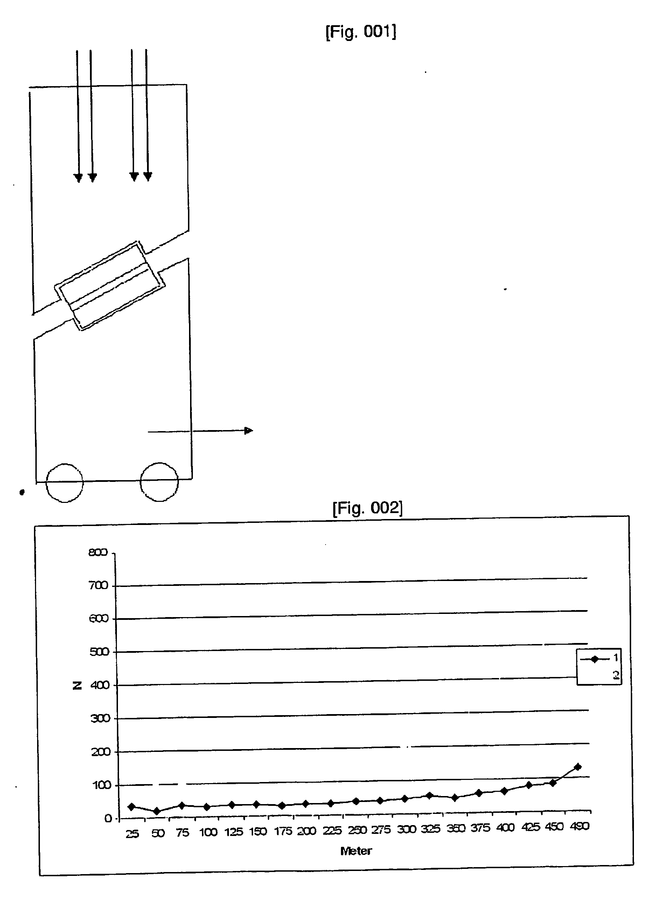

T-peel-Test
Zur Quantifizierung der Eigenhaftung der Folien (Blockingkraft) ist ein, in Anlehnung an
EP 0067022 B--.
modifizierter T-peel-strength-Test einzusetzen: Hierbei werden zwei 3 cm x 10 cm große Streifen der zu testenden Folie unter einer Last von 60 N bei einer Temperatur von 23 °C und 50 rF für 48 h aufeinandergelegt. Anschließend werden die Streifen mit definierter Geschwindigkeit von 500 mm/min unter einen Winkel von 2 x 90 ° unter Messung der Abzugskraft auseinandergezogen. Figur 1 zeigt schematisch den Aufbau der Messapparatur. Die Oberflächenrauhigkeit der Folien wird vor der Messung durch Pressen so weit entfernt, dass keine Struktur der Oberflächen mehr wahrnehmbar ist. Die Schälkraft wird auf 1 N genau abgelesen, aus drei Einzelwerten wird das arithmetische Mittel gebildet und in N/30 mm angegeben. Im übrigen wird auf die Beschreibung des T-peel-strength-Tests in der
EP 0067022 B--.
verwiesen.

Kompressionsschertest
Zur Beurteilung der Haftung einer PVB-Folie an Mineralglas wird der Kompressionsschertest in Anlehnung an
DE 19756274 A--.
durchgeführt. Zur Herstellung der Prüfkörper wird die zu prüfende PVB-Klebefolie zwischen zwei ebene Silikatglasscheiben des Formats 300 mm x 300 mm mit einer Dicke von 2 mm gebracht, in einem Vorverbundofen mit Kalanderwalzen zu einem Glas-Vorverbund entlüftet und anschließend in einem Autoklav bei einem Druck von 12 bar und bei einer Temperatur von 140 °C innerhalb von insgesamt 90 min. zu einem ebenen Verbundsicherheitsglas verpresst. Aus dem so hergestellten Verbundsicherheitsglas werden 10 Proben mit den Maßen 25,4 mm x 25,4 mm geschnitten. Diese werden unter einem Winkel von 45° in eine zweiteilige, in Fig. 1 symbolisch dargestellte Prüfapparatur eingespannt, wobei die Tiefe der Aussparungen ca. 2/3 der jeweiligen Glasdicke beträgt. Die obere Hälfte wird mit einer stetig steigenden, genau vertikal nach unten gerichteten Kraft beaufschlagt, bis es zu einer Abscherung innerhalb des Prüfkörpers, d. h. der zu prüfenden Verbundsicherheitsglas-scheiben kommt.

Die Prüfparameter sind wie folgt:

**Tabelle 1**

| | |
|---|---|
| Prüfkörper: | quadratisch 25,4 mm x 25,4 mm |
| Verlegung: | untere Scheibe jeweils mit der Luft- bzw. Feuerseite zur Folie (Luft/Luft), oder obere und untere Scheibe jeweils mit der Zinnseite zur Folie (BadBad) |
| Lagerung vor dem | 4h bei Normklima 23°C/50% RLF |
| Versuch: | |
| Vorschub: | 2,5 mm/min |
| Probenanzahl: | 10 |
| Auswertung: | Maximalkraft, die zur Abscherung der Folie vom Glas benötigt wird. Die Kraft wird auf die Probenfläche bezogen (in N/mm² oder psi) |

Für jedes Beispiel wird die bei der Abscherung ausgeübte Kraft von zehn gleichen Prüfkörpern linear gemittelt. Soweit in den nachfolgenden Beispielen und den Ansprüchen auf den mittleren Kompressionsschertest-Wert Bezug genommen wird, ist damit dieser Mittelwert aus 10 Messungen gemeint. Im übrigen wird auf die DE 19756274 A--. verwiesen.

### Beispiele

Es wurden Mischungen der Folien der Zusammensetzung nach Tabelle 2 (Angaben in Gew. %) zu Folien mit einer Dicke von 0.76 mm extrudiert Die Folien wurden anschließend mit den beschriebenen T-Peel- und Kompressionsschertests bewertet (Tabelle 3).

Der Vergleich zeigt, das erfindungsgemäße Folien bei nahezu unveränderter Haftung deutlich verbesserte Blockingeigenschaften aufweisen. Die Sicherheitseigenschaften von Verbundglasscheiben mit den erfindungsgemäßen Folien sind - wie der Pummeltest zeigt - ebenfalls praktisch unverändert.

Figur 2 zeit einen Vergleich der Abrollkräfte von Folienwickeln aus erfindungsgemäßen Folien (1) und dem Vergleichsbeispiel (2) nach einer Lagerung von 3 Monaten bei einer Temperatur von 40°C. Die erfindungsgemäßen Folien lassen sich deutlich besser abrollen.

**Tabelle 2**

| Rezeptur | Vergleichsbeispiel | Ausführungs□beispiel |
|---|---|---|
| Mowital B 68/1 | 75,5 | 75,5 |
| Fa KSE | 20,5 | 20,5 |
| PVOH Gehalt | | |
| Weichmacher: DHA | 24,5 | 24,5 |
| Kaliumacetat | 0,04 | 0,04 |
| Glycolube P | -- | 0,04 |
| Fa. Lonza | | |
| Tinuvin 571 | 0,15 | 0,15 |

**Tabelle 3**

| | Vergleichsbeispiel | Ausführungs□beispiel |
|---|---|---|
| Schertest [N/mm²] | 13,6 | 13,7 |
| Luft/Luft | | |
| Zinn/Zinn | 13,1 | 12,9 |
| T-Peeltest [N/30 mm] | | |
| Obers. / Obers. | 34,0 | 0,27 |
| Unters. / Unters. | 33,1 | 0,29 |
| Obers. Unters. | 33,8 | 0,24 |
| Feuchte Pier % | 0,44 | 0,45 |
| Pummel Luft/Luft | 5-6 | 5-6 |
| Zinn/Zinn | 6 | 5-6 |

### Industrielle Anwendbarkeit

Die erfindungsgemäßen Folien eignen sich besonders zur Herstellung von Sicherheitsverbundglas. Ein weiterer Gegenstand der Erfindung sind daher Verbundglaslaminate, enthaltend die weichmacherhaltigen Polyvinylbutyralfolien nach der Erfindung und mindestens zwei Glasscheiben. Alternativ kann eine oder beide der Glasscheiben durch eine transparente Polymerscheibe (PE, PVC, PU oder Polycarbonat) ersetzt sein. Die erfindungsgemäßen Laminate werden bevorzugt im Automobilbau als Windschutzscheibe oder Seitenverglasung eingesetzt.

## Patentansprüche

1. Weichmacherhaltige Polyvinylbutyralfolie mit einer T-Peel-Eigenhaftung von 0,1 bis 24 N/30 mm und einer Kompressionsscherhaftung an Luft/Luft- Glasoberflächen von 10 bis 20 N/mm², enthaltend
50 bis 80 Gew.% Polyvinylbutyral
20 bis 50 Gew.% mindestens eines Weichmachers
0,01 bis 5 Gew.% mindestens eines Antiblockingmittels
0,001 bis 1 Gew.% mindestens einer die Haftung der Mischung an Glas reduzierenden Substanz.

2. Weichmacherhaltige Polyvinylbutyralfolie nach Anspruch 1, ***dadurch gekennzeichnet,* dass** die Folie als Antiblockingmittel ein oder mehrere Pentaerythritester der Formel I 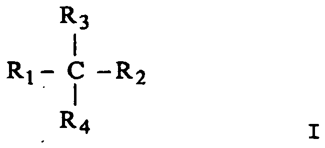 mit R₁, R₂ R₃, R₄ jeweils gleich oder verschiedenen:
-CH₂OH, -CH₂OR₅, -CH₂OCOR₅ oder -CH₂OCO-R₆-COOR₅ wobei R₅, R₆ für gesättigte oder ungesättigte, verzweigte oder unverzweigte Kohlenwasserstoffreste mit 1 bis 26 Kohlenstoffatome steht,
enthält.

3. Weichmacherhaltige Polyvinylbutyralfolie nach einem der Ansprüche 1 oder 2, ***dadurch gekennzeichnet,* dass** die Folie als Antiblockingmittel ein oder mehrere Amidwachse enthält.

4. Weichmacherhaltige Polyvinylbutyralfolie nach einem der Ansprüche 1 bis 3 **gekennzeichnet *durch*** eine Kompressionsscherhaftung an Zinn/Zinn-Glasoberflächen 6-15 N/mm² beträgt.

5. Weichmacherhaltige Polyvinylbutyralfolie nach einem der Ansprüche 1 bis 4 ***dadurch gekennzeichnet,* dass** die Folie nach einer Lagerung von mindestens 2 Monaten bei einer Temperatur von 10 + 3 °C einen Trübungswert gemäß ASTM D 1003 - 51 von maximal 1 % aufweist.

6. Weichmacherhaltige Polyvinylbutyralfolie nach einem der Ansprüche 1 bis 5, ***dadurch gekennzeichnet*, dass** die Folie ein oder mehrere Antiblockingmittel enthält, wobei diese Antiblockingmittel eine gleichzeitige Veränderung der Haftung der Folie an Luft/Luft- und/oder Zinn/Zinn-Glasoberflächen von maximal ± 20 % gemäß Kompressionsschertest bewirken.

7. Weichmacherhaltige Polyvinylbutyralfolie nach einem der Ansprüche 1 bis 6 ***dadurch gekennzeichnet,* dass** die Folie eine oder mehrere Substanzen zur Kontrolle der Haftung der Folien an Glas enthalten, wobei diese Substanzen eine gleichzeitige Erhöhung der Eigenhaftung der Folie gemäß T-Peeltest von maximal 20 % bewirken.

8. Verbundglaslaminat, umfassend mindestens zwei Glasscheiben und eine weichmacherhaltige Polyvinylbutyralfolie nach einem der Ansprüche 1 bis 7.

## Claims

1. A plasticiser-containing polyvinyl butyral film with an inherent T-peel adhesion of 0.1 to 24 N/30 mm and a compression shear adhesion to air/air-glass surfaces of 10 to 20 N/mm², containing
| | |
|---|---|
| 50 to 80 % by weight | of polyvinyl butyral |
| 20 to 50 % by weight | of at least one plasticiser |
| 0.01 to 5 % by weight | of at least one anti-blocking agent |
| 0.001 to 1 % by weight | of at least one substance reducing the adhesion of the mixture to glass. |

2. The plasticiser-containing polyvinyl butyral film according to claim 1, **characterised in that** the film contains, as an anti-blocking agent, one or more pentaerythrite esters of formula I 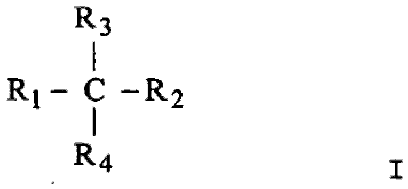 where R₁, R₂, R₃ and R₄ are each the same of different:
- CH₂OH, -CH₂OR₅, -CH₂OCOR₅ or -CH₂OCO-R₆- COO₅ wherein R₅ and R₆ stand for saturated or unsaturated, branched or unbranched hydrocarbon radicals containing 1 to 26 carbon atoms.

3. The plasticiser-containing polyvinyl butyral film according to either claim 1 or claim 2, **characterised in that** the film contains one or more amide waxes as an anti-blocking agent.

4. The plasticiser-containing polyvinyl butyral film according to any one of claims 1 to 3, **characterised by** a compression shear adhesion to tin/tin-glass surfaces of 6 to 15 N/mm².

5. The plasticiser-containing polyvinyl butyral film according to any one of claims 1 to 4, **characterised in that** the film has a turbidity value in accordance with ASTM D 1003 - 51 of 1 % at most after storage for at least 2 months as a temperature of 10 ± 3 °C.

6. The plasticiser-containing polyvinyl butyral film according to any one of claims 1 to 5, **characterised in that** the film contains one or more anti-blocking agents, these anti-blocking agents simultaneously changing the adhesion of the film to air/air-glass and/or tin/tin-glass surfaces by ± 20 % at most in accordance with compression shear tests.

7. The plasticiser-containing polyvinyl butyral film according to any one of claims 1 to 6, **characterised in that** the films contain one or more substances for controlling the adhesion of the films to glass, these substances simultaneously increasing the inherent adhesion of the film by 20 % at most in accordance with T-peel tests.

8. A composite glass laminate comprising at least two glass panes and a plasticiser-containing polyvinyl butyral film according to any one of claims 1 to 7

## Revendications

1. Feuille en polyvinyle de butyral contenant des plastifiants, dotée d'une adhérence de contact entre feuilles en essai de pelage en T comprise entre 0,1 et 24 N / 30 mm et d'une adhérence au cisaillement en compression, sur des surface en verre de type air/air, comprise entre 10 et 20 N/mm², contenant
50 à 80 % en poids de polyvinyle de butyral
20 à 50 % en poids d'au moins un plastifiant
0,01 à 5 % en poids d'au moins un agent anti-adhérence de contact entre feuilles
0,001 à 1 % en poids d'au moins une substance diminuant l'adhérence du mélange au verre.

2. Feuille en polyvinyle de butyral selon la revendication 1, ***caractérisée en ce que*** ladite feuille contient, en tant qu'agent anti-adhérence de contact entre feuilles, un ou plusieurs esters de pentaérythritol de formule I 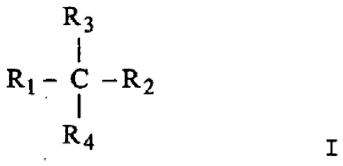 avec R₁, R₂, R₃, R₄ qui peuvent être identiques ou différents : -CH₂OH, -CH₂OR₅, -CH₂OCOR₅ ou - CH₂OCO-R₆-COOR₅
R₅, R₆ représentant des radicaux hydrocarbonés ramifiés ou linéaires, saturés ou insaturés, avec 1 à 26 atomes de carbone,

3. Feuille en polyvinyle de butyral selon l'une des revendications 1 ou 2, ***caractérisée en ce que*** ladite feuille contient, en tant qu'agent anti-adhérence de contact entre feuilles, une ou plusieurs cires d'amide.

4. Feuille en polyvinyle de butyral contenant des plastifiants selon l'une des revendications 1 à 3, ***caractérisée par*** une adhérence au cisaillement en compression, sur des surface en verre de type étain/étain, comprise entre 5 et 15 N/mm².

5. Feuille en polyvinyle de butyral selon l'une des revendications 1 à 4, ***caractérisée en ce que*** ladite feuille présente, après un stockage d'au moins 2 mois une température de 10 ± 3 °C une valeur d'opacification selon ASTM D 1003 - 51 inférieure ou égale à 1 %.

6. Feuille en polyvinyle de butyral contenant des plastifiants selon l'une des revendications 1 à 5, ***caractérisée en ce que*** ladite feuille contient un ou plusieurs agents anti-adhérence de contact entre feuilles, lesdits agents anti-adhérence de contact entre feuilles provoquant une évolution simultanée de l'adhérence de ladite feuille sur des surfaces en verre de type air/air et/ou de type étain/étain qui reste inférieure ou égale à ± 20 % selon l'essai de cisaillement en compression.

7. Feuille en polyvinyle de butyral contenant des plastifiants selon l'une des revendications 1 à 6, ***caractérisée en ce que*** ladite feuille contient un ou plusieurs substances de contrôle de l'adhérence des feuilles sur du verre, lesdites substances provoquant, simultanément, une augmentation de l'adhérence de contact entre feuilles qui reste inférieure ou égale à 20 %, selon l'essai de pelage en T.

8. Laminé de verre feuilleté, comprenant au moins deux vitres et une feuille en polyvinyle de butyral contenant des plastifiants selon l'une des revendications 1 à 7.
